# EUROPEAN PATENT SPECIFICATION

(11) **EP 0 633 689 B1**
(45) Date of publication and mention of the grant of the patent: **21.04.1999**
(21) Application number: 94107161.5
(22) Date of filing: 06.05.1994
(51) Int. Cl.: H04N 3/15

(54) **Infrared solid-state image sensor**
Infrarot-Festkörperbildsensor
Capteur infrarouge à l'état solide

(30) Priority: 05.07.1993 JP 165325/93
(43) Date of publication of application: 11.01.1995
(73) Proprietor: MITSUBISHI DENKI KABUSHIKI KAISHA, Chiyoda-ku Tokyo-to, 100 (JP)
(72) Inventor: Kimata, Masafumi, c/o Mitsubishi Denki K.K., Itami-shi, Hyogo 664 (JP); Seto, Toshiki, c/o Mitsubishi Denki K.K., Kamakura-shi, Kanagawa 247 (JP)
(74) Representative: Prüfer, Lutz H., Dipl.-Phys.

(56) References cited:
- FR-A- 2 660 821
- IEEE JOURNAL OF SOLID-STATE CIRCUITS, vol.SC-22, no.6, December 1987, NEW-YORK (US) pages 1124 - 1129 MASAFUMI KIMATA ET AL. 'A 512x512-Element PtSi Schottky-Barrier Infrared Image Sensor'

## Description

The present invention relates to an infrared solid-state image sensor according to the preamble of claim 1.

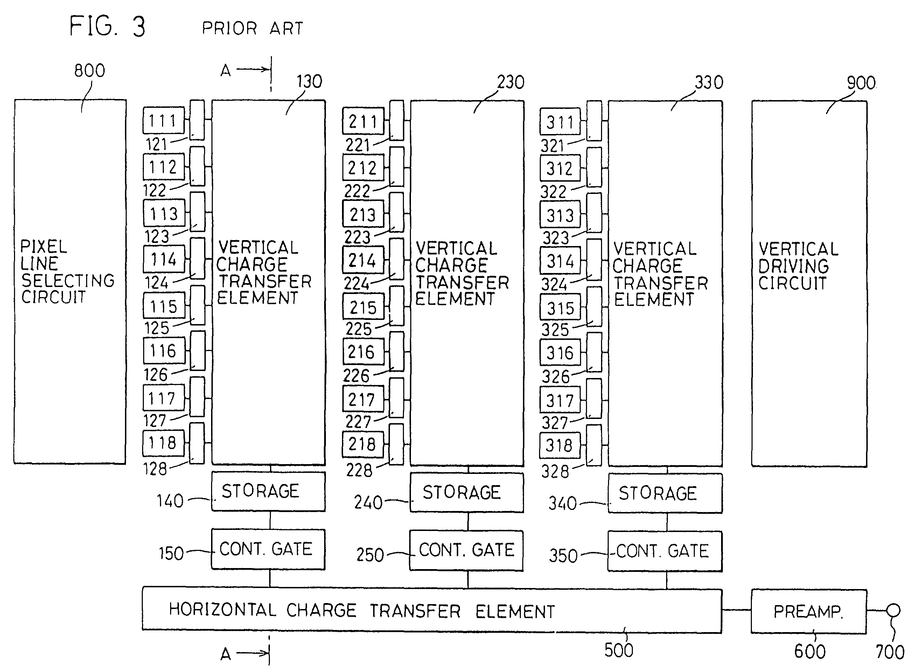

In Fig. 3, an infrared solid-state image sensor of a CSD (Charge Sweep Device) type of the prior art is shown in a schematic block diagram. A solid-state image sensor of the CSD type is described in detail in, for example, IEEE Journal of Solid State Circuits, Vol. SC-22, 1987, pp. 1124-1129.

The infrared solid-state image sensor of Fig. 3 includes photodetectors 111-118, 211-218, 311-318 disposed as a two-dimensional pixel matrix in the horizontal direction and the vertical direction. Transfer gates 121-128, 221-228, 321-328 control transfer of signal charge from photodetectors 111-118, 211-218, 311-318 to vertical charge transfer elements 130, 230, 330, respectively. Storage gates 140, 240, 340 temporarily store the signal charge transferred from vertical charge transfer elements 130, 230, 330, respectively. Storage control gates 150, 250, 350 control transfer of signal charge from storage gates 140, 240, 340, respectively, into a horizontal charge transfer element 500. A preamplifier 600 provides through an output terminal 700 a voltage signal converted in proportion to an amount of signal charge provided from horizontal charge transfer element 500.

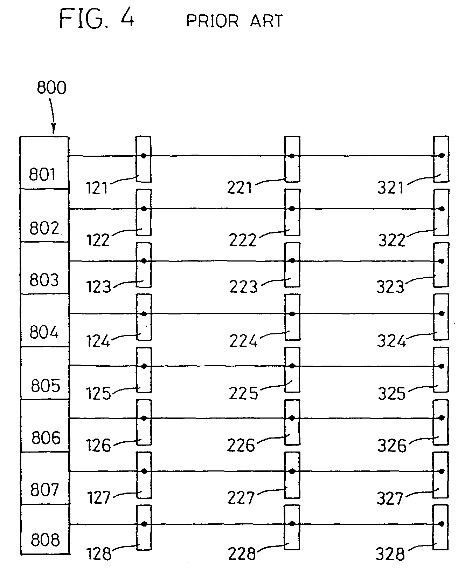

A pixel line selecting circuit 800 is a shift register, which selects one of pixel lines in the horizontal direction (for example, lines 118, 218, 318). In Fig. 3, for simplification of the figure, connection lines relating to pixel line selecting circuit 800 are omitted. Fig. 4 shows a connection relationship between pixel line selecting circuit 800 and transfer gates 121-128, 221-228, 321-328. Each of stages 801-808 in pixel line selecting circuit 800 is connected to a corresponding one of transfer gate lines arranged in the horizontal direction. More specifically, if, for example, pixel line selecting circuit 800 opens transfer gates 128, 228, 328 through stage 808, signal charge from photodetectors 118, 218, 318 is transferred into vertical charge transfer elements 130, 230, 330, respectively.

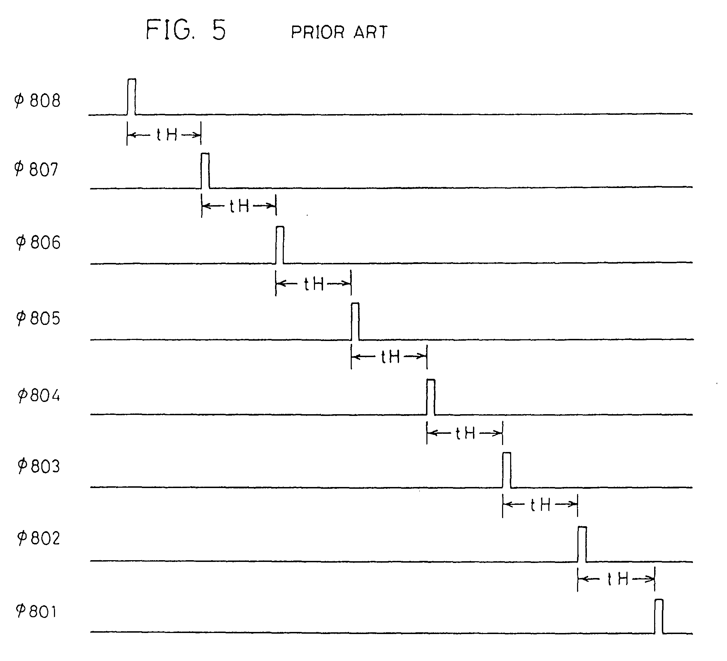

Pixel line selecting circuit 800 generates clock signals as shown in Fig. 5. More specifically, a period from the time when the output of the nth stage of pixel line selecting circuit 800 attains an H (high) level to the time when the (n-1)th stage attains an H level is one horizontal period tH. One horizontal pixel line is selected for every horizontal period tH. In other words, one horizontal period corresponds to a time during which one horizontal pixel line is scanned in a solid-state image sensor.

As is seen from Figs. 3 to 5, in the prior art, horizontal pixel lines are selected in order, with one the nearest to horizontal charge transfer element 500 being first.

A vertical driving circuit 900 drives transfer of signal charge in vertical charge transfer elements 130, 230, 330. In Fig. 3, for simplification of the figure, a connection between vertical driving circuit 900 and vertical charge transfer elements 130, 230, 330 is omitted.

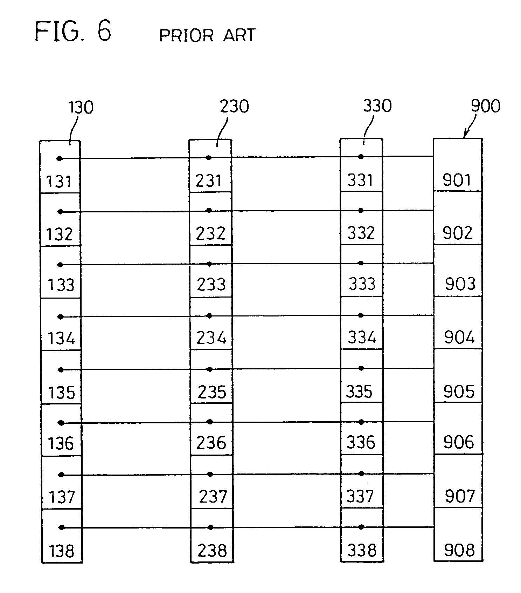

Fig. 6 shows a connection between vertical driving circuit 900 and vertical charge transfer elements 130, 230, 330. Vertical charge transfer elements 130, 230, 330 include gate electrodes 131-138, 231-238, 331-338, respectively. Each of lines of these gate electrodes arranged horizontally is connected to a corresponding one of a plurality of stages 901-908 in vertical driving circuit 900. Clock signals are applied to these gate electrodes in the vertical charge transfer elements from vertical driving circuit 900.

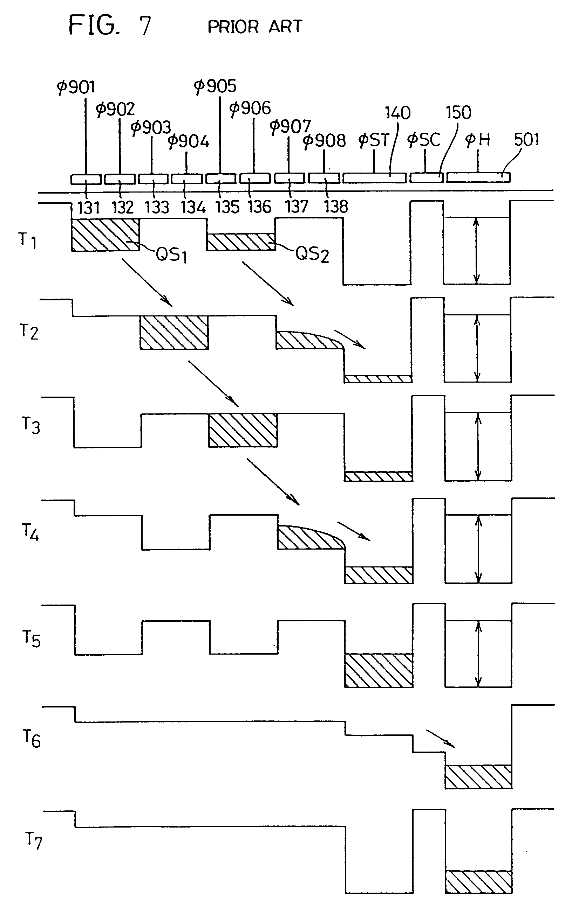

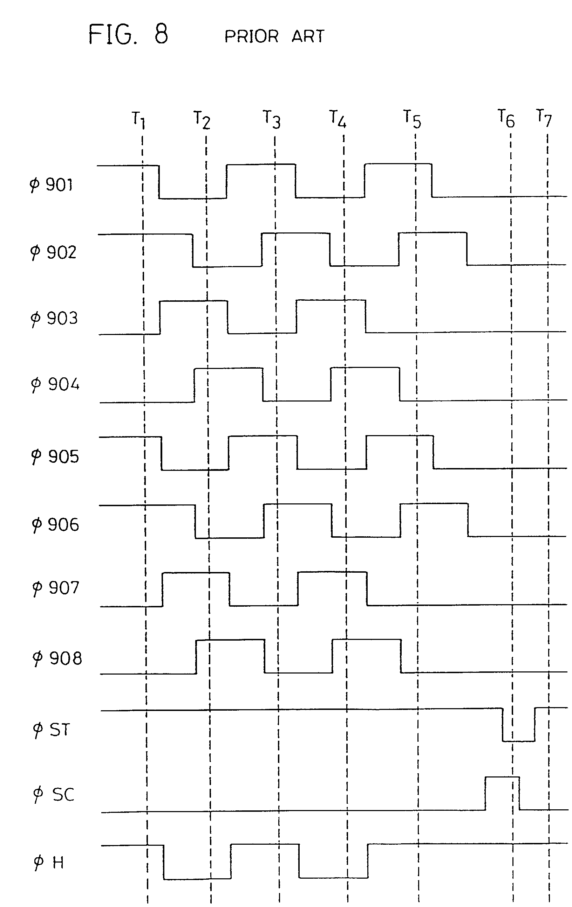

Fig. 7 shows potential states depending on time in a cross section taken along the line A-A of Fig. 3. In the figure, a gate electrode 501 shown rightmost is included in a horizontal CCD (Charge Coupled Device) serving as horizontal charge transfer element 500. Fig. 8 is a timing chart showing clock signals applied to various gate electrodes shown in Fig. 7. More specifically, clock signals φ901-φ908 are respectively applied to gate electrodes 131-138 in vertical charge transfer element 130 from vertical driving circuit 900. Clock signals φST, φSC, and φH are applied to a storage gate 140, a storage control gate 150, and a horizontal CCD gate 501, respectively. Potential states T1-T7 shown in Fig. 7 correspond to states at times T1-T7 shown in Fig. 8 , respectively.

In potential state T1 of Fig. 7, a state immediately after transfer gate 121 is selected by pixel line selecting circuit 800, and signal charge is read out from photodetector 111 into vertical charge transfer element 130 is shown as an example. More specifically, charges QS1, QS2 are signal charges read out from photodetector 111 serving as one pixel. After being subjected to potential changes as at times T2, T3, T4, these signal charges QS1, QS2 are gathered under storage gate 140 as in a potential state shown at time T5.

During such a charge transfer in vertical charge transfer element 130, horizontal CCD 500 continues its own transfer operation. In the next horizontal blanking period, as is shown in a state at time T6 of Fig. 7, signal charge gathered under storage gate 140 is transferred into horizontal CCD 500 through storage control gate 150. In the next horizontal period, signal charge from storage gate 140 as shown in a potential state at time T7 of Fig. 7 is sequentially transferred together with signal charge from other storage gates 240, 340, to be applied to preamplifier 600.

In the above description, for simplification of the figures, a two-dimensional solid-state image sensor including eight pixel lines in the horizontal direction and three pixel columns in the vertical direction was described. However, a solid-state image sensor in practice generally includes several hundred horizontal pixel lines and several hundred vertical pixel columns.

As compared to visible light image sensing, infrared image sensing is characterized by image sensing at low contrast under a high background level. Quantitative comparison of optical signal intensities in infrared image sensing and visible light image sensing is shown in, for example, IEDM Technical Digest, 1983, p. 5. In the visible light image sensing, the dark state is a state where light is not incident on a solid-state image sensor at all. The signal intensity is in proportion to a quantity of light on the basis of the dark state. Photon flux reflected from an object in the ordinary visible light image sensing is 10⁸-10¹⁷ photon/sec•cm², and contrast, the ratio of the signal intensity to the background level, is approximately 0.2-8.0.

On the other hand, an object irradiates infrared light having an intensity depending on the temperature. The infrared solid-state image sensor detects infrared light irradiated depending on the temperature of the object. In the infrared image sensing, the ordinary background is in a state at room temperature, and the infrared solid-state image sensor is always subjected to a high level background radiation. For example, in a typical wavelength region of 3-5µm, photon flux of the background radiation is approximately 8 x 10¹⁴ photon/sec•cm², and a change of the signal intensity corresponding to a temperature change of 1°C is only approximately 0.045 of the background level.

More specifically, in the infrared solid-state image sensor, a weak signal component superimposed on a high level direct current component due to the background radiation must be detected. Therefore, in the infrared solid-state image sensor, loss of charge occurring in the process of reading out signal charge is critical. In other words, under the high background level, even slight loss of signal charge causes deterioration of a quality of photographed image.

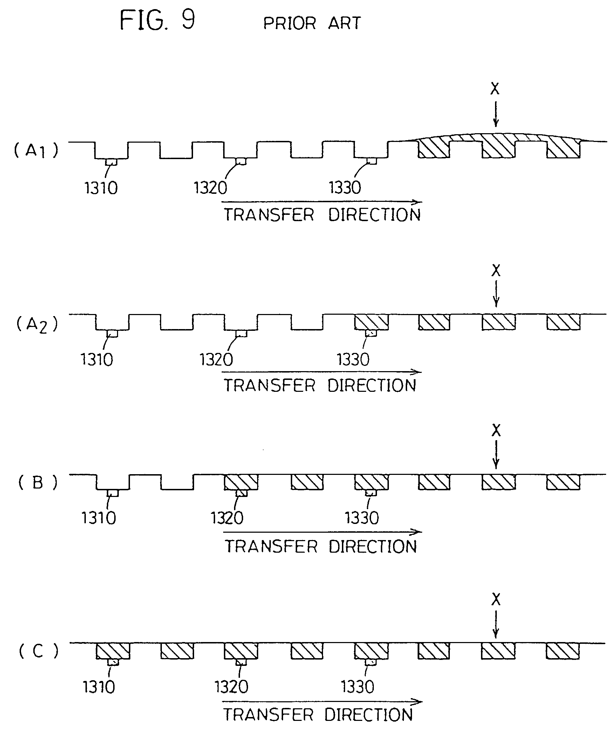

Fig. 9 shows spreading of signal charge in the vertical charge transfer element. In Fig. 9 (A1), signal charge immediately after being read out to a site of an arrow X from one pixel is shown by a hatched region. The signal charge spreads in the longitudinal direction of the vertical charge transfer element as shown in Fig. 9 (A2) to fill a plurality of potential wells. Then, the signal charge is transferred from left to right of Fig. 9.

The signal charge in the vertical charge transfer element spreads in opposite directions along the vertical charge transfer element from a point X at which it is read out. The more the amount of signal charge, the larger the spreading. More specifically, it is shown that the amount of signal charge read out in Fig. 9 (B) is more than that in Fig. 9 (A2), and that the amount of signal charge read out in Fig. 9 (C) is more than that in Fig. 9 (B).

Potential wells in a channel of the vertical charge transfer element are created to be as uniform as possible under respective gate electrodes. However, because of various reasons, potential ununiformities 1310, 1320, 1330 as shown in Fig. 9 are practically generated. The reasons therefor are, for example, ununiformity of dimension of the channel width and variation of impurity concentration in the channel. In Fig. 9, ununiformity of the potential is represented by potential recessed portions 1310, 1320, 1330. However, small potential projections are sometimes generated in bottom portions of the potential wells. Potential recessed portions 1310, 1320, 1330 serve as signal charge traps. Although potential point-like projections do not serve as signal charge traps, a portion enclosed by a line-like projection serves as a signal charge trap.

More specifically, if there exists ununiformity in the bottom portion of the potential well, signal charge trapped at the ununiform site is not transferred at the time of charge transfer in the vertical direction. The signal charge remains, causing loss of signal charge in charge transfer. However, if potential recessed portions 1310, 1320, 1330, for example, in Fig. 9 are already filled with charge, loss of signal charge does not occur. Signal charge remaining in the potential recessed portion repeats the transfer operation several times without new signal charge supplied. As a result, the trapped signal charge is gradually discharged, and the potential recessed portions return to their empty states.

In scanning of one frame, when horizontal pixel lines are selected in order with one the nearest to horizontal charge transfer element 500 being first, in the beginning of scanning of the next frame, a charge trap region caused by ununiformity of potential in the vertical charge transfer element is in the empty state. This is because the vertical charge transfer element repeats the charge transfer operation in the vertical direction several ten times also during the vertical blanking period after completion of scanning of one frame, even though signal charge is not transferred from a pixel. Therefore, although some of signal charge is lost in the vertical charge transfer element in each frame, the loss depends on the amount of signal charge transferred from one pixel, which means that the amount of loss of signal charge varies depending on the pixel.

For example, in the case where there is little signal charge as shown in Fig. 9 (A2), only recessed portion 1330 traps the signal charge. However, in the case where there is much signal charge as shown in Fig. 9 (B), not only recessed portion 1330 but also recessed portion 1320 trap signal charge. In the case where there is much more signal charge shown in Fig. 9 (C), recessed portions 1330, 1320, 1310 trap signal charge.

More specifically, since the amount of loss of signal charge changes depending on the amount of signal charge transferred from a pixel, it is not possible to carry out a predetermined sensitivity collection for every pixel. The inventors have recognized such a problem in the infrared solid-state image sensor for the first time.

One object of the present invention is to provide an infrared solid-state image sensor which can prevent deterioration of an image quality due to loss of transferred signal charge, even if there exists ununiformity of potential in a vertical charge transfer element.

The object of the present invention is solved by the infrared solid-state image sensor according to claim 1.

A further development of the invention is given in subclaim 2.

In the infrared solid-state image sensor according to claims 1 or 2, since charge trap sites due to ununiformity of potential in the vertical charge transfer elements are filled with charge at latest when second et seq. horizontal pixel lines are selected, deterioration of an image quality due to local trap of signal charge in the vertical charge transfer elements will not occur.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic block diagram of an infrared solid-state image sensor according to another embodiment of the present invention.

Fig. 2 is a timing chart of clock signals generated by a vertical driving circuit of Fig. 1.

Fig. 3 is a schematic block diagram showing one example of an infrared solid-state image sensor of the prior art.

Fig. 4 is a diagram showing a connection between a pixel line selecting circuit and transfer gates of Fig. 3.

Fig. 5 is a timing chart of clock signals generated by the pixel line selecting circuit of Fig. 3.

Fig. 6 is a diagram showing a connection between a vertical driving circuit and gate electrodes in vertical charge transfer elements of Fig. 3.

Fig. 7 is a potential diagram for explaining a charge transfer operation in the vertical charge transfer elements of Fig. 3.

Fig. 8 is a timing chart of clock signals used for charge transfer in Fig. 7.

Fig. 9 is a potential diagram for explaining spreading of signal charge in the vertical charge transfer elements in a conventional infrared solid-state image sensor.

### DESCRIPTION OF THE PREFERRED EMBODIMENTS

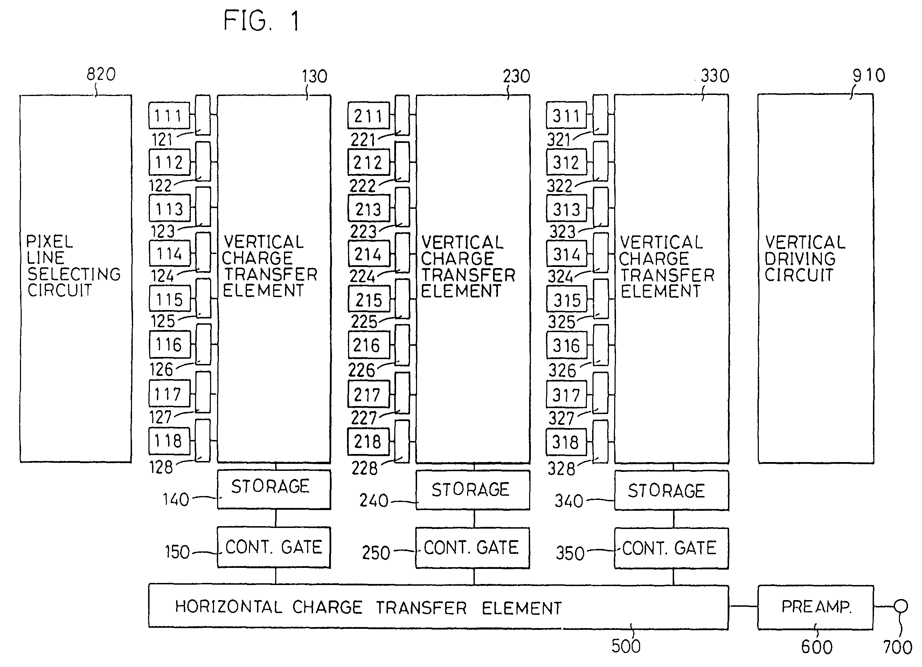

In Fig. 1, the infrared solid-state image sensor according to an embodiment of the present invention is shown in a schematic block diagram. Although the infrared solid-state image sensor of Fig. 1 is similar to that of Fig. 3, a vertical driving circuit 910 of Fig. 1 is different from a vertical driving circuit 900 of Fig. 3.

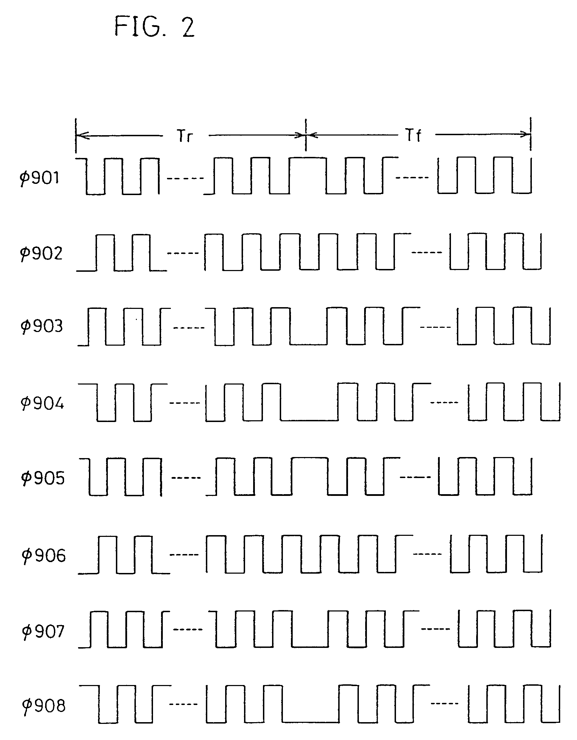

Fig. 2 is a timing chart showing driving clock signals generated by vertical driving circuit 910. When the vertical charge transfer element is operated by clock shown in Fig. 3, signal charge is transferred in a direction opposite to the forward direction toward horizontal charge transfer element 500 in a period Tr, and then the signal charge is transferred in the forward direction in a following period Tf. The time length of the period Tr of transfer in the reverse direction is determined so that signal charge from any horizontal pixel line reaches the potential well in the vertical charge transfer element the farthest from horizontal charge transfer element 500.

More specifically, also in the infrared solid-state image sensor of Fig. 1, since signal charge passes through all charge trap regions due to ununiformity of potential in the vertical charge transfer element for every horizontal period, the trap regions are always filled with charge, causing no loss of new signal charge.

When clock signals as shown in Fig. 2 are used, if the switching timing of the clock signal from the period Tr to the period Tf is within the period for reading out from an output terminal 700, switching of the clock signal sometimes affects the output signal. Therefore, it is desired that the switching timing of the clock signal is within the horizontal blanking period.

As described above, according to the present invention, since the charge trap sites due to ununiformity of the potential in the vertical charge transfer element are filled with charge, at least before second et seq. horizontal pixel lines are selected, it is possible to provide an infrared solid-state image sensor in which an image is not deteriorated due to loss of signal charge in the vertical charge transfer element.

## Claims

1. An infrared solid-state image sensor, comprising:
a plurality of photodetectors (111-118, 211-218, 311-318) for carrying out photoelectric conversion and charge storage as a plurality of pixels disposed in the horizontal direction and the vertical direction;
pixel line selecting means (820) for selecting at least one horizontal pixel line in one horizontal period;
a plurality of vertical charge transfer elements (130, 230, 330) for transferring in the vertical direction signal charge from a pixel selected by said pixel line selecting means;
vertical driving (910) means for driving said vertical charge transfer elements; and
a horizontal charge transfer element (500) for transferring signal charge from said vertical charge transfer elements in the horizontal direction,
characterized in that
said vertical driving means (910) is adapted to control said vertical charge transfer elements so that they transfer said signal charge in the reverse direction away from said horizontal charge transfer element (500) at least until spreading of signal charge read out in said vertical charge transfer elements (130,230,330) from a horizontal pixel line selected at a first time of scanning reaches a potential well which is the farthest from said horizontal charge transfer element (500) to fill a charge trap region existing in said vertical charge transfer elements (130,230,330), and then transfer said signal charge in the forward direction toward said horizontal charge transfer element (500).

2. The infrared solid-state image sensor as recited in claim 1, wherein
a timing at which the transfer direction of said signal charge in said vertical charge transfer elements (130, 230, 330) is switched from said reverse direction to said forward direction is within a horizontal blanking period.

## Patentansprüche

1. Infrarotfestkörperbildsensor mit
einer Mehrzahl von Photodetektoren (111-118, 211-218, 311-318) zum Ausführen einer photoelektrischen Umwandlung und Ladungsspeicherung als eine Mehrzahl von Pixeln, die in der horizontalen Richtung und der vertikalen Richtung angeordnet sind,
einem Pixelzeilenauswahlmittel (820) zum Auswählen von zumindest einer horizontalen Pixelzeile in einer horizontalen Periode,
einer Mehrzahl von Vertikalladungsübertragungselementen (130, 230, 330) zum Übertragen einer Signalladung von einem durch das Pixelzeilenauswahlmittel ausgewählten Pixel in der vertikalen Richtung,
einem Vertikaltreibermittel (910) zum Treiben der Vertikalladungsübertragungselemente und
einem Horizontalladungsübertragungselement (500) zum Übertragen einer Signalladung von dem Vertikalladungsübertragungselementen in der horizontalen Richtung,
dadurch gekennzeichnet, daß
das Vertikaltreibermittel (910) derart angepaßt ist, daß die Vertikalladungsübertragungselemente derart gesteuert werden, daß sie die Signalladung in der umgekehrten Richtung von dem Horizontalladungsübertragungselement (500) weg, zumindest bis eine Ausbreitung von einer Signalladung in den Vertikalladungsübertragungselementen (130, 230, 330), die von einer horizontalen Pixelzeile, die beim ersten Mal des Abtastens ausgewählt ist,
ausgelesenen ist, einen Potentialtopf, der der weiteste von dem Horizontalladungsübertragungselement (500) ist, erreicht, derart übertragen, daß ein Ladungsfangstellenbereich, der in den Vertikalladungsübertragungselementen (130, 230, 330) existiert, gefüllt wird, und dann die Signalladung in der Vorwärtsrichtung zu dem Horizontalladungsübertragungselement (500) übertragen.

2. Infrarotfestkörperbildsensor nach Anspruch 1, bei dem ein Zeitablauf, bei dem die Übertragungsrichtung der Signalladung in den Vertikalladungsübertragungselementen (130, 230, 330) von der umgekehrten Richtung in die Vorwärtsrichtung umgeschaltet wird, innerhalb einer horizontalen Austastperiode ist.

## Revendications

1. Capteur d'images à l'état solide à infrarouge comprenant :
une pluralité de photodétecteurs (111-118; 211-218; 311-318) pour l'exécution d'une conversion photoélectrique et d'un stockage de charges, sous la forme d'une pluralité de pixels disposés dans la direction horizontale et dans la direction verticale;
des moyens (820) de sélection de lignes de pixels pour sélectionner au moins une ligne horizontale de pixels pendant une période horizontale;
une pluralité d'éléments de transfert vertical de charges (130,230,330) pour transférer, dans la direction verticale, une charge de signal à partir d'un pixel sélectionné par lesdits moyens de sélection de lignes de pixels;
des moyens de commande verticale (910) pour commander lesdits éléments de transfert vertical de charges; et
un élément de transfert horizontal de charge (500) pour transférer une charge de signai depuis lesdits éléments de transfert vertical de charges dans la direction horizontale,
caractérisé en ce que
lesdits moyens de commande verticale (910) sont adaptés pour commander lesdits éléments de transfert vertical de charges de sortie pour qu'ils transfèrent ladite charge de signal dans la direction inverse à l'opposé dudit élément de transfert horizontal de charge (500) au moins jusqu'à ce que l'étalement d'une charge de signal lue dans lesdits éléments de transfert vertical de charges (130,230,330) à partir d'une ligne horizontale de pixels sélectionnée à un premier instant du balayage atteigne un puits de potentiel qui est le plus éloigné dudit élément de transfert horizontal de charge (500) pour remplir une région de piégeage de charges existant dans lesdits éléments de transfert vertical de charges (130,230,330), puis transférer ladite charge de signal dans la direction d'avance vers ledit élément de transfert horizontal de charge (500).

2. Capteur d'images à l'état solide à infrarouge selon la revendication 1, dans lequel
un instant auquel la direction de transfert de ladite charge de signal dans lesdits éléments de transfert vertical de charges (130,230,330) est commutée de ladite direction inverse dans ladite direction d'avance, se situe dans une période de suppression horizontale.
